# EUROPÄISCHE PATENTSCHRIFT

(11) **EP 1 447 286 B1**
(45) Veröffentlichungstag und Bekanntmachung des Hinweises auf die Patenterteilung: **12.03.2008**
(21) Anmeldenummer: 04011122.1
(22) Anmeldetag: 08.08.2001
(51) Int. Cl.: B60R 25/02

(54) **Vorrichtung zur Verriegelung der Lenkspindel eines Fahrzeuges**
Device for locking a steering wheel column
Dispositif de verrouillage pour la colonne de direction d'un vehicule

(30) Priorität: 26.08.2000 DE 10041984
(43) Veröffentlichungstag der Anmeldung: 18.08.2004
(62) Teilanmeldung aus: 01202995.5
(73) Patentinhaber: VALEO Sicherheitssysteme GmbH, 85253 Erdweg (DE)
(72) Erfinder: Frick, Alexander, 86153 Augsburg (DE); Pieh, Mario, 97340 Marktbreit (DE); Rocheteau, Etienne, 85253 Grossberghofen (DE); Starken, Harald, 85253 Walkertshofen (DE); Lieb, Kurt, 63500 Seligenstadt (DE)
(74) Vertreter: Croonenbroek, Thomas Jakob

(56) Entgegenhaltungen:
- EP-A- 0 952 051
- EP-A- 0 989 038
- DE-C- 3 611 483
- GB-A- 2 257 767

## Beschreibung

Die Erfindung betrifft eine Vorrichtung zur Verriegelung der Lenkspindel einer Lenkeinrichtung eines Fahrzeuges mit einem in einem Gehäuse angeordneten und von einer Ent- in eine Verriegelungsstellung und umgekehrt verschiebbaren Sperrbolzen.

Eine derartige Vorrichtung ist beispielsweise aus der DE 197 13 318 C1 bekannt. Bei dieser bekannten Vorrichtung setzt sich das Gehäuse der Vorrichtung aus zwei das Mantelrohr der Lenkspindel umschließenden Gehäuseteile zusammen, wobei das eine Gehäuseteil unlösbar mit dem Mantelrohr und das zweite Gehäuseteil mit dem ersten Gehäuseteil lösbar verbunden ist. Um zu vermeiden, daß ein unbefugter Dritter in der Verriegelungsstellung des Sperrbolzens das zweite Gehäuseteil etwa durch Lösen von Schrauben etc. öffnen kann und dann den Sperrbolzen aus seiner Verriegelungsstellung drückt, schlägt die DE 197 13 318 C1 die Verwendung eines zusätzlichen Sicherungsbolzens vor. Dieser wird derart von dem Sperrbolzen angesteuert, daß er in der Verriegelungsstellung des Sperrbolzens die zweite Gehäusehälfte mit der ersten Gehäusehälfte von dem Gehäuseinneren aus (von außen nicht erkennbar) verbindet.

Nachteilig bei dieser bekannten Vorrichtung ist unter anderem, daß nach einem gewaltsamen Öffnen des Gehäuses, z.B. mit entsprechenden Spezialwerkzeugen, ein unbefugter Dritter den Sperrbolzen wiederum von seiner Ver- in seine Entriegelungsstellung verschieben kann.

Aus der EP-A-0 952 051 ist ein Lenkschloß mit einem Schließzylinder bekannt, wobei zur Diebstahlsicherung als Sicherungselement eine Schenkelfeder verwendet wird, die sich einerseits an einem Führungsteil eines Sperrbolzens und andererseits an einem Schließkern des Schließzylinders abstützt. Dabei ist der Schließkern gegenüber dem Gehäuse des Schließzylinders drehbar angeordnet.

Nachteilig bei diesem bekannten Lenkschloß ist unter anderem die erforderliche, relativ komplexe Ausgestaltung von Schließzylinder und Führungsteil des Sperrbolzens, da als Schließzylinder keine üblichen Serienteile verwendet werden können. Außerdem ist die bekannte Vorrichtung relativ störanfällig, da bereits ein etwas kräftigerer Schlag oder Stoß auf den Schließzylinder zu einer Betätigung der Drehfeder führen kann, was dann zu einer ungewollten Blockierung des Sperrbolzens führt.

Der Erfindung liegt die Aufgabe zugrunde, eine Vorrichtung der eingangs erwähnten Art anzugeben, die einfach aufgebaut ist und bei der ein unbeabsichtigtes Auslösen des Sicherungselementes nicht zu befürchten ist.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im wesentlichen auf dem Gedanken, in einem Führungsteil des Sperrbolzens ein in einer Längsausnehmung verschiebbares federbeaufschlagtes Sicherungselement anzuordnen, das durch ein an dem Gehäuse innenseitig befestigtes Verschlußelement in seiner Lage fixiert ist. Wird das Gehäuse durch einen unbefugten Dritten geöffnet, so wird mit dem entsprechenden Gehäusebereich auch das Verschlußelement entfernt und das Sicherungselement wird mindestens teilweise in eine Ausnehmung des Sperrbolzens verschoben und sichert diesen in seiner Verriegelungsstellung.

Bei einer vorteilhaften Ausführungsform der Erfindung ist die Ausnehmung des Sperrbolzens an dessen Rand angeordnet und derart ausgestaltet, daß in der Verriegelungsstellung des Sperrbolzens bei Entfernen des Gehäuseteiles eine Sicherung des Sperrbolzens durch Klemmung erfolgt. Eine derartige Anordnung der Ausnehmung des Sperrbolzens weist den Vorteil auf, daß die Ausnehmung leicht in den Sperrbolzen einbringbar und die Schwächung des Bolzens durch die Ausnehmung gering ist.

Das Verschlußelement wird vorzugsweise in dem Gehäusebereich angeordnet, von dem angenommen werden muß, daß ein unbefugter Dritter in diesem Bereich das Gehäuse gewaltsam öffnen wird. Dieses wird in der Regel der dem Innenraum des Fahrzeuges zugewandte Bereich sein. Denkbar ist auch, den entsprechenden Gehäusebereich außenseitig derart auszugestalten, daß ein unbefugter Dritter durch die Gestaltung veranlaßt wird, an diesem Bereich seine Werkzeuge zum Öffnen des Gehäuses anzusetzen.

Vorteilhaft ist es ferner, wenn an dem Führungsteil des Sperrbolzens von außen nicht erkennbar ist, wo sich das Sicherungselement genau befindet, damit ein Unbefugter nicht durch Aufbohren des Führungsteiles das Sicherungsteil entfernen und anschließend den Sperrbolzen verschieben kann.

Weitere Einzelheiten und Vorteile der Erfindung ergeben sich aus den folgenden anhand von Figuren erläuterten Ausführungsbeispielen. Es zeigen:
Fig.1 den Längsschnitt durch eine erfindungsgemäße Vorrichtung mit einem in einem Führungsteil verschiebbaren Sperrbolzen, der sich in seiner Verriegelungsstellung befindet und durch einen querverschiebbaren Sicherungsbolzen sicherbar ist;
Fig.2 einen Schnitt entlang einer in Fig. 1 mit II-II bezeichneten Schnittlinie;
Fig.3 eine Seitenansicht auf den in seiner Verriegelungsstellung befindlichen Sperrbolzen einer zweiten erfindungsgemäßen Vorrichtung, wobei die Sicherung zwischen Sperrbolzen und Führungsteil durch Klemmung erfolgt.

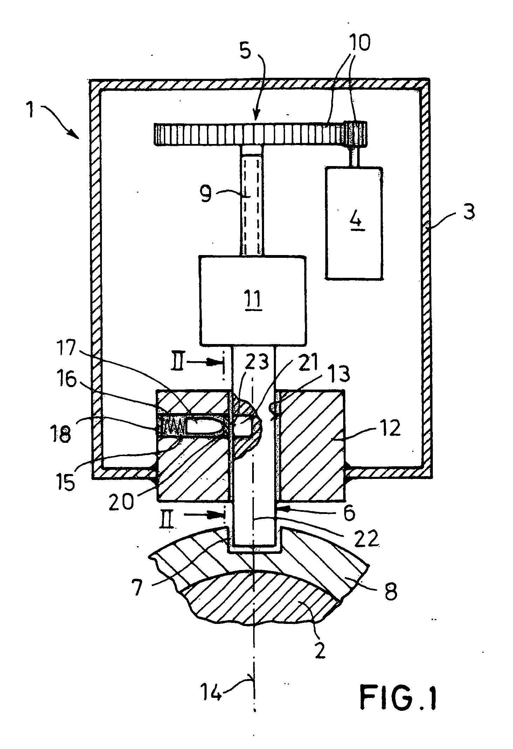

In Fig.1 ist mit 1 eine erfindungsgemäße Vorrichtung zur elektrischen Verriegelung einer Lenkspindel 2 einer Kraftfahrzeug-Lenkeinrichtung bezeichnet. Die Vorrichtung 1 umfaßt ein Gehäuse 3 sowie einen in dem Gehäuse 3 angeordneten Elektromotor 4 mit nachgeschaltetem Spindelantrieb 5 zur Verschiebung eines Sperrbolzens 6. Der Sperrbolzen 6 greift in seiner in Fig.1 dargestellten Verriegelungsstellung in eine nutenförmige Ausnehmung 7 eines an der Lenkspindel 2 befestigten Schließringes 8 ein.

Der Spindelantrieb 5 besteht aus einer Gewindespindel 9, die über ein Zahnradgetriebe 10 von dem Elektromotor 4 angetrieben wird, und einem in einer Führung gelagerten Mitnehmer 11 mit Innengewinde, welches in das Gewinde der Gewindespindel 9 eingreift.

Der Mitnehmer 11 weist auf seiner dem Sperrbolzen 6 zugewandten Seite eine nicht dargestellte Aufnahme auf, über die der Sperrbolzen 6 auf seiner der Lenkspindel 2 abgewandten Seite mit dem Mitnehmer 11 auswechselbar verbunden ist.

Außerdem umfaßt die Vorrichtung 1 zur Führung des vorderen Teiles 22 des Sperrbolzens 6 ein mit dem Gehäuse 3 und der Lenkeinrichtung des Fahrzeuges verbindbares Führungsteil 12, über welches die erfindungsgemäße Vorrichtung 1 an der Lenkeinrichtung befestigbar ist. Das Führungsteil 12 enthält zur formschlüssigen Führung des Sperrbolzens 6 eine Führungsausnehmung 13 und ist derart ausgebildet, daß es bei einem gewaltsamen Verdrehen der Lenkspindel 2 im verriegelten Zustand des Sperrbolzens 6 die auf dieses Teil einwirkenden Kräfte aufnimmt.

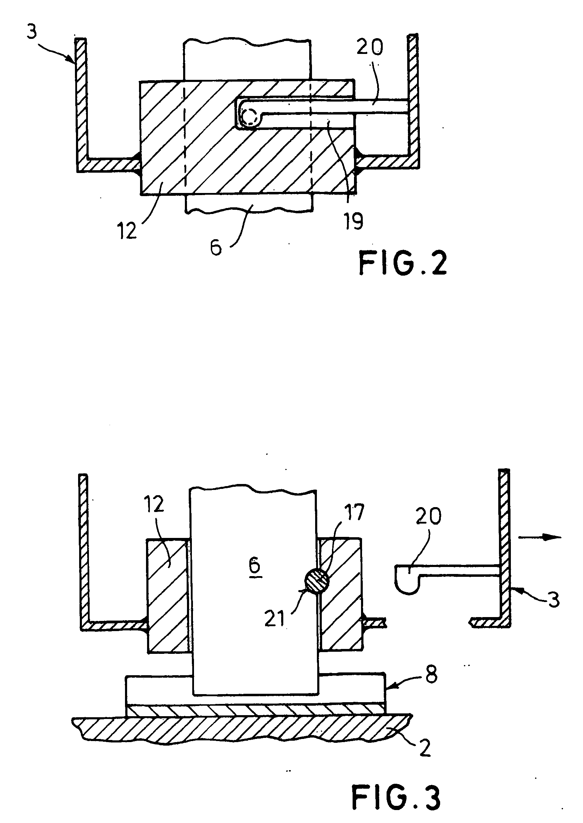

In dem Führungsteil 12 ist eine quer zur Längsachse 14 des Sperrbolzens 6 sich erstrekkende erste Ausnehmung 15 vorgesehen, die außenseitig verschlossen ist und innenseitig über eine erste Öffnung 23 in die Führungsausnehmung 13 mündet. In der ersten Ausnehmung 15 ist ein durch eine Druckfeder 16 beaufschlagter Sicherungsbolzen 17 längsverschiebbar angeordnet, wobei sich die Druckfeder 16 an der der Führungsausnehmung 13 abgewandten Außenwand 18 abstützt. Im Bereich der Führungsausnehmung 13 ist die erste Ausnehmung 15 durch ein an dem Gehäuse 3 innenseitig befestigtes und in einer zweiten Ausnehmung 19 des Führungsteiles 12 senkrecht zur ersten Ausnehmung 15 verschiebbares, relativ flaches leistenförmiges Verschlußelement 20 verschlossen (Fig.2). An diesem Verschlußelement 20 stützt sich der Sicherungsbolzen 17 gegen den Druck der vorgespannten Druckfeder 16 ab (Fig. 1).

Außerdem befindet sich in dem Sperrbolzen 6 eine an den Sperrbolzen angepaßte Ausnehmung 21, die mit der ersten Ausnehmung 15 des Führungsteiles 12 fluchtet und damit der ersten Öffnung 23 gegenüberliegt. In dem Ausführungsbeispiel ist die Länge dieser Ausnehmung 21 kürzer gewählt als die Länge des Sicherungsbolzens 17.

Öffnet nun ein unbefugter Dritter gewaltsam das Gehäuse 3, so wird mit Entfernen der entsprechenden Gehäusewand, an der sich das Verschlußelement 20 befindet, auch dieses Element von der ersten Ausnehmung 15 des Führungsteiles 12 entfernt und der Sicherungsbolzen 17 wird durch die Druckfeder 16 in die Ausnehmung 21 des Sperrbolzens 6 hineingedrückt, so daß der Sicherungsbolzen 17 anschließend teilweise in dieser Ausnehmung 21 und teilweise in der ersten Ausnehmung 15 des Führungsteiles 12 formschlüssig gelagert ist. Der Sperrbolzen 6 und damit auch die Lenkspindel 2 bleiben in ihrer Verriegelungsstellung gesichert. Eine Verschiebung des Sperrbolzens 6 ist ohne größeren Aufwand nicht möglich.

Die Erfindung ist selbstverständlich nicht auf das vorstehend beschriebene Ausführungsbeispiel beschränkt. So können die Abmessungen des Sicherungsbolzens 17 und der Ausnehmung 21 des Sperrbolzens 6 derart gewählt werden, daß der Sicherungsbolzen 17 nach Entfernen des Verschlußelementes 20 durch den Sperrbolzen 6 hindurchragt und sich beidseitig vom Sperrbolzen 6 in entsprechenden Ausnehmungen des Führungsteiles 12 abstützt.

Als besonders vorteilhaft hat es sich erwiesen, wenn die Ausnehmung des Sperrbolzens nicht im mittleren Bereich, sondern am Rand des Sperrbolzens angeordnet und derart ausgestaltet ist, daß bei Entfernen des Verschlußelementes eine Sicherung des Sperrbolzens durch Klemmung erfolgt. Ein entsprechendes Ausführungsbeispiel ist in Fig.3 wiedergegeben, wobei der Fall dargestellt ist, daß das Verschlußelement 20 entfernt wurde. Dabei weist der wiederum mit 17 bezeichnete Sicherungsbolzen einen kreisförmigen Querschnitt auf und die mit 21 bezeichnete Ausnehmung des Sperrbolzens 6 besitzt eine halbkreisförmige Querschnittskontur.

## Patentansprüche

1. Vorrichtung zur Verriegelung der Lenkspindel (2) einer Lenkeinrichtung eines Fahrzeuges mit einem in einem Gehäuse (3) angeordneten und von einer Ent- in eine Verriegelungsstellung und umgekehrt verschiebbaren Sperrbolzen (6) mit den Merkmalen:
a) die Vorrichtung (1) umfaßt auf ihrer der Lenkspindel (2) zugewandten Seite ein Führungsteil (12) mit einer an den Sperrbolzen (6) formschlüssig angepaßten Führungsausnehmung (13), in welcher der vordere Teil des Sperrbolzens (6) verschiebbar gelagert ist;
b) in dem Führungsteil (12) ist eine sich quer zur Längsachse (14) des Sperrbolzens (6) erstreckende erste Ausnehmung (15) vorgesehen, die über eine erste Öffnung (23) in die Führungsausnehmung (13) mündet;
c) in dem Sperrbolzen (6) befindet sich eine Ausnehmung (21), die in der Verriegelungsstellung des Sperrbolzens (6) der ersten Öffnung (23) der ersten Ausnehmung (15) des Führungsteiles (12) gegenüberliegt;
d) in der ersten Ausnehmung (15) des Führungsteiles (12) ist ein federbeaufschlagtes Sicherungselement (17) verschiebbar angeordnet,
e) das Sicherungselement (17) ist durch ein an dem Gehäuse (3) innenseitig befestigtes Verschlußelement (20) in seiner Lage fixiert, so daß in der Verriegelungsstellung des Sperrbolzens (6) bei Entfernen des Gehäusebereiches, an dem das Verschlußelement (20) befestigt ist, das Sicherungselement (17) durch die auf das Sicherungselement (17) ausgeübte Federkraft in die Ausnehmung (21) des Sperrbolzens (6) geschoben wird und den Sperrbolzen (6) in seiner Verriegelungsstellung sichert.

2. Vorrichtung nach Anspruch 1, **dadurch gekennzeichnet, daß** zur Fixierung des Sicherungselementes (17) die erste Öffnung (23) der ersten Ausnehmung (15) des Führungsteiles (12) durch das Verschlußelement(20) verschlossen ist, daß das Verschlußelement (20) in einer zur ersten Ausnehmung (15) senkrecht angeordneten zweiten Ausnehmung (19) des Führungsteiles (12) verschiebbar angeordnet ist und daß sich das Ende des federbeaufschlagten Sicherungselementes (17) an dem Verschlußelement (20) abstützt.

3. Vorrichtung nach Anspruch 1 oder 2, **dadurch gekennzeichnet, daß** die erste Ausnehmung (15) außenseitig verschlossen ist, und daß es sich bei dem Sicherungselement (17) um einen durch eine Druckfeder (16) beaufschlagten Sicherungsbolzen handelt, wobei sich die Druckfeder (16) an der der Führungsausnehmung (13) abgewandten Außenwand (18) der ersten Ausnehmung (15) abstützt.

4. Vorrichtung nach einem der Ansprüche 1 bis 3, **dadurch gekennzeichnet, daß** die Ausnehmung (21) des Sperrbolzens (6) an dessen Rand angeordnet und derart ausgestaltet ist, daß in der Verriegelungsstellung des Sperrbolzens (6) bei Entfernen des Verschlußelementes (20) eine Sicherung des Sperrbolzens (6) durch Klemmung erfolgt.

5. Vorrichtung nach Anspruch 4, **dadurch gekennzeichnet, daß** bei Verwendung eines Sicherungsbolzens (17) als Sicherungselement dieser einen kreisförmigen Querschnitt aufweist und daß die Ausnehmung (21) des Sperrbolzens (6) eine halbkreisförmige Querschnittskontur besitzt.

6. Vorrichtung nach einem der Ansprüche 1 bis 5, **dadurch gekennzeichnet, daß** das Verschlußelement (20) in dem Bereich des Gehäuses (3) befestigt ist, der dem Fahrzeuginnenraum zugewandt ist.

## Claims

1. Apparatus for locking the steering spindle (2) of a steering device of a vehicle having a locking bolt (6) which is arranged in a housing (3) and can be displaced from an unlocked position into a locked position and vice versa, having the following features:
a) the apparatus (1) comprises, on its side which faces the steering spindle (2), a guide part (12) having a guide recess (13) which is adapted to the locking bolt (6) in a form-fitting manner and in which the front part of the locking bolt (6) is mounted displaceably;
b) a first recess (15) which extends transversely with respect to the longitudinal axis (14) of the locking bolt (6) and opens into the guide recess (13) via a first opening (23) is provided in the guide part (12);
c) a recess (21) which lies opposite the first opening (23) of the first recess (15) of the guide part (12) in the locked position of the locking bolt (6) is situated in the locking bolt (6);
d) a spring-loaded securing element (17) is arranged displaceably in the first recess (15) of the guide part (12),
e) the securing element (17) is fixed in its position by a closure element (20) which is fastened to the housing (3) on the inside, with the result that, in the locked position of the locking bolt (6), when that housing region is removed, to which the closure element (20) is fastened, the securing element (17) is pushed into the recess (21) of the locking bolt (6) by the spring force, which is exerted on the securing element (17), and secures the locking bolt (6) in its locked position.

2. Apparatus according to Claim 1, **characterized in that** the first opening (23) of the first recess (15) of the guide part (12) is closed by the closure element (20) in order to fix the securing element (17), **in that** the closure element (20) is arranged displaceably in a second recess (19) of the guide part (12), which second recess (19) is arranged perpendicularly with respect to the first recess (15), and **in that** the end of the spring-loaded securing element (17) is supported on the closure element (20).

3. Apparatus according to Claim 1 or 2, **characterized in that** the first recess (15) is closed on the outside, and **in that** the securing element (17) is a securing bolt which is loaded by a compression spring (16), the compression spring (16) being supported on that outer wall (18) of the first recess (15) which faces away from the guide recess (13).

4. Apparatus according to one of Claims 1 to 3, **characterized in that** the recess (21) of the locking bolt (6) is arranged at its edge and is configured in such a way that the locking bolt (6) is secured by clamping in the locked position of the locking bolt (6) when the closure element (20) is removed.

5. Apparatus according to Claim 4, **characterized in that**, if a securing bolt (17) is used as securing element, it has a circular cross section, and **in that** the recess (21) of the locking bolt (6) has a semicircular cross-sectional contour.

6. Apparatus according to one of Claims 1 to 5, **characterized in that** the closure element (20) is fastened **in that** region of the housing (3) which faces the vehicle interior.

## Revendications

1. Dispositif de verrouillage de la colonne de direction (2) d'un dispositif de direction d'un véhicule, comprenant un pêne de verrouillage (6) disposé dans un boîtier (3) et pouvant être déplacé d'une position de déverrouillage dans une position de verrouillage et inversement, ayant les caractéristiques suivantes :
a) le dispositif (1) comprend, sur son côté tourné vers la colonne de direction (2), une partie de guidage (12) avec un évidement de guidage (13) adapté par engagement positif au pêne de verrouillage (6), dans lequel la partie avant du pêne de verrouillage (6) est montée de manière déplaçable ;
b) un premier évidement (15) s'étendant transversalement à l'axe longitudinal (14) du pêne de verrouillage (6) est prévu dans la partie de guidage (12), et débouche par le biais d'une première ouverture (23) dans l'évidement de guidage (13).
c) un évidement (21) se trouve dans le pêne de verrouillage (6), lequel est opposé à la première ouverture (23) du premier évidement (15) de la partie de guidage (12) dans la position de verrouillage du pêne de verrouillage (6) ;
d) un élément de sécurité (17) sollicité par ressort est disposé de manière déplaçable dans le premier évidement (15) de la partie de guidage (12) ;
e) l'élément de sécurité (17) est fixé en position par un élément de fermeture (20) fixé du côté intérieur sur le boîtier (3), de sorte que, dans la position de verrouillage du pêne de verrouillage (6) lorsque la région du boîtier sur laquelle est fixé l'élément de fermeture (20) est enlevée, l'élément de sécurité (17) soit poussé dans l'évidement (21) du pêne de verrouillage (6) par la force de ressort exercée sur l'élément de sécurité (17) et maintient le pêne de verrouillage (6) dans sa position de verrouillage.

2. Dispositif selon la revendication 1, **caractérisé en ce que** pour la fixation de l'élément de sécurité (17), la première ouverture (23) du premier évidement (15) de la partie de guidage (12) est fermée par l'élément de fermeture (20), **en ce que** l'élément de fermeture (20) est disposé de manière déplaçable dans un deuxième évidement (19) de la partie de guidage (12) disposé perpendiculairement au premier évidement (15), et **en ce que** l'extrémité de l'élément de sécurité (17) sollicité par ressort s'appuie sur l'élément de fermeture (20).

3. Dispositif selon la revendication 1 ou 2, **caractérisé en ce que** le premier évidement (15) est fermé du côté extérieur, et **en ce que** l'élément de sécurité (17) est un pêne de sécurité sollicité par un ressort de pression (16), le ressort de pression (16) s'appuyant sur la paroi extérieure (18) du premier évidement (15), opposée à l'évidement de guidage (13).

4. Dispositif selon l'une quelconque des revendications 1 à 3, **caractérisé en ce que** l'évidement (21) du pêne de verrouillage (6) est disposé sur son bord et est configuré de telle sorte que dans la position de verrouillage du pêne de verrouillage (6), lorsque l'élément de fermeture (20) est enlevé, il se produise un maintient du pêne de verrouillage (6) par serrage.

5. Dispositif selon la revendication 4, **caractérisé en ce que** lors de l'utilisation d'un pêne de sécurité (17) en tant qu'élément de sécurité, celui-ci présente une section transversale circulaire et **en ce que** l'évidement (21) du pêne de verrouillage (6) possède un contour en section transversale de forme semi-circulaire.

6. Dispositif selon l'une quelconque des revendications 1 à 5, **caractérisé en ce que** l'élément de fermeture (20) est fixé dans la région du boîtier (3) qui est tournée vers l'habitacle du véhicule.
